# EUROPÄISCHE PATENTSCHRIFT

(11) **EP 1 339 773 B1**
(45) Veröffentlichungstag und Bekanntmachung des Hinweises auf die Patenterteilung: **02.02.2005**
(21) Anmeldenummer: 01997516.8
(22) Anmeldetag: 20.11.2001
(51) Int. Cl.: C08G 63/00

(54) **VERFAHREN ZUR HERSTELLUNG VON SCHMELZFÄHIGEN POLYESTERN**
METHOD FOR PRODUCING MELTABLE POLYESTERS
PROCEDE DE PREPARATION DE POLYESTERS APTES A LA FUSION

(30) Priorität: 21.11.2000 DE 10057678
(43) Veröffentlichungstag der Anmeldung: 03.09.2003
(73) Patentinhaber: THÜRINGISCHES INSTITUT FÜR TEXTIL- UND KUNSTSTOFF-FORSCHUNG E.V., 07407 Rudolstadt (DE)
(72) Erfinder: HEINEMANN, Klaus, 07407 Rudolstadt (DE); TAEGER, Eberhard, 07407 Weissbach ü. Rudolstadt (DE); MEUSEL, Erich, 98746 Katzhütte (DE); MÜLLER, Wolfgang, 07407 Rudolstadt (DE)
(74) Vertreter: Plate, Jürgen, Dr.
(86) Internationale Anmeldenummer: PCT/DE2001/004294
(87) Internationale Veröffentlichungsnummer: WO 2002/042353

(56) Entgegenhaltungen:
- DE-A- 4 342 705

## Beschreibung

Die Erfindung betrifft ein Verfahren zur Herstellung von Polyesterseitenketten-gepfropften, steif- und/oder halbsteifkettigen Polymeren, die mit schmelzbaren Polyestern molekularverstärkte recyclingfähige Blends bilden, die zu Filamenten und Fasern mit hoher mechanischer Belastbarkeit verformt werden können und darüber hinaus in Blends aus Polyestermatrix und steif- bzw. halbsteifkettigen Polymeren als Verträglichkeitsvermittler dienen.

### [Stand der Technik]

Die weit verbreiteten aliphatisch-aromatischen Polyester sind thermoplastisch verformbar und werden im großen Maßstab zur Herstellung von Faserstoffen, Folien und Formteilen verwendet. Auf Grund ihres strukturell und morphologisch bedingten Eigenschaftsspektrums sind diese preiswerten Polyester jedoch für Einsatzgebiete, die besonders hohe Anforderungen an die Festigkeit stellen, ungeeignet.

Durch Verwendung von anorganischen Verstärkungsmaterialien, insbesondere von Glasfasern, können zwar die Festigkeit, Steifigkeit und Dimensionsstabilität der Polyester verbessert werden, aber die Recyclingfähigkeit wird damit stark eingeschränkt. Die Herstellung dünnwandiger Formteile und Folien sowie die Erzielung einwandfreier Oberflächen wird durch derartige Zusätze aber erschwert. Hochmolekulare, vollaromatische Polyester erfüllen im allgemeinen die Anforderungen an die Festigkeit, doch sie sind, auch wenn sie, wie in der DE-OS 20 25 071 beschrieben, auf Grund der verwendeten Komponenten thermotrop sind, schwer verarbeitbar.

Der Zusatz von steif- oder halbsteifkettigen thermotropen Polymeren zur Verbesserung der mechanischen Eigenschaften des Matrixpolymeren ist für verschiedene Polymere bereits beschrieben. So entstehen nach G. KISS [ Polym. Eng. And Science 27 (1987 ) 6, 410-423 ]] durch Einsatz steif- oder halbsteifkettiger, thermotroper Polymere (LCP) bei der thermoplastischen Verarbeitung von Polyamid und Polyester verstärkend wirkende Fibrillen. Die weitgehende Unverträglichkeit des LCP mit den Polymeren schränkt jedoch dessen Nutzung stark ein. Eine Verbesserung des Verstärkungseffektes kann nach [EP0406979A1] durch Zusatz von Phenoxyharzen als Verträglichkeitsvermittler nur teilweise erreicht werden.

Es ist allgemein bekannt, dass sich Pfropfcopolymere als Verträglichkeitsvermittler in einer großen Anzahl kommerziell genutzter Polymerblends auszeichnen. Die Hauptketten dieser Makromoleküle sind verträglich mit dem zu dispergierenden Polymeren, während die Seitenketten Affinität zum Matrixpolymeren zeigen. Die Wirksamkeit von Polypropylen-gepfropften LCP als Verträglichkeitsvermittler für in situ verstärkte LCP/Polypropylenblends konnten DATTA et al. [Annu.Tech. conf.-Soc. Plast. Eng., 49 th, 913-918] nachweisen. HÖCKER et al. [Makromol. Chem.190 (1989 ),, 3295] gelang die Herstellung von steifkettigen Polyarylaten mit hochmolekularen Polystyrolseitenketten. Auf diese Weise konnte die Verträglichkeit der erzeugten, stäbchenförmigen Pfropfcopolymeren mit Polystyrol so weit verbessert werden, dass eine homogene Phase entstand. All diese Pfropfcopolymere sind jedoch nicht für eine ausreichende Modifizierung von Polyesteramiden geeignet.

Die Herstellung und Verwendung thermotroper Polyesterimide beschreiben KRIECHELDORF et al. [EP 0 293 713]. Sie sollen ausgezeichnete Verarbeitbarkeit und gute mechanische Eigenschaften aufweisen. Ihre Herstellung ist aber sehr kostenintensiv. Für ihre Verwendung als Verstärkungsmaterial in linearen, schmelzbaren Polyestern ist allerdings ihre Wirkung nicht ausreichend.

Gemäß DE-OS 43 42 705 wird die Verträglichkeit von stäbchenförmigen, schmelzbaren, insbesondere thermotropen Polymeren mit aliphatischen oder aliphatisch-aromatischen Polyamiden verbessert bzw. eine Molekularverstärkung durch Polyamidseitenketten-gepfropfte steif- oder halbsteifkettige Polymere erreicht, die Anhydridend- und/oder -seitengruppen tragen. Diese reaktiven Gruppen sind in der Lage, mit den Amino- bzw. Amidgruppen des Polyamids zu reagieren und damit über kovalente Bindungen eine feste Verknüpfung zwischen dem thermotropen Polymeren und dem Polyamid herzustellen.

Als Verstärkungsmaterial für lineare schmelzbare Polyester, insbesondere für die Filamentherstellung, ist diese nicht bekannt. Für spezielle Einsatzgebiete von Polyesterfilamenten in technischen Bereichen und der Teppichherstellung ist gegenüber den konventionellen Typen eine Erhöhung der Festigkeit, des E- Moduls und der Formbeständigkeit bei erhöhten Temperaturen erforderlich.

### [Aufgabe der Erfindung]

Aufgabe der vorliegenden Erfindung ist es daher ein recyclingfähiges schmelzfähiges Polyester, insbesondere Copolyesteramid, mit verbesserten mechanischen Eigenschaften, wie Festigkeit, Reißkraft, zu entwickeln, dass für die Herstellung von Filamenten und Fasern, insbesondere für technische Bereiche und der Teppichherstellung geeignet ist.

Die Aufgabe wird dadurch gelöst, indem die monomeren Bausteine steif- bzw. halbsteifkettiger Polymerer bzw. aus einzelnen Monomeren hergestellte Vorkondensate gemeinsam mit monound/oder difunktionalisierten cyclischen Anhydriden von Dicarbonsäuren oder deren Vorkondensate, mit einzelnen Monomeren zu Polymeren mit cyclischen Anhydridend- und/oder -seitengruppen, bevorzugt in Schmelze oder Lösung, polykondensiert werden, die gebildeten Polyesterimidanhydride mit den Hydroxyl- und/oder Estergruppen schmelzbarer, linearer Polyester erfindungsgemäß zu seitenkettengepfropften steifund/oder halbsteifkettigen molekularverstärkten Polymeren umgesetzt werden. Überraschenderweise sind diese Blends auch besonders dazu geeignet als Verträglichkeitsvermittler zu dienen, vorzugsweise beim Blenden von aliphatischen Polyestern mit aliphatischen Polyamiden. Durch die cyclischen Dicarbonsäureanhydridend- und/oder seitengruppen wird das thermotrope Copolyesterimid an konventionelle Polyester-Moleküle reaktiv angebunden, was zu einer besseren Verteilung im Polymeren führt. Diese bessere Verteilung bewirkt eine Verstärkung des Copolyesterimides.

Die erfindungsgemäße Herstellung der steif- bzw. halbsteifkettigen Polymeren mit seiten- und/oder endständigen cyclischen Dicarbonsäureanhydridgruppen erfolgt auf an sich bekannte Weise aus den Monomeren durch Polykondensation bevorzugt in der Schmelze unter Einbeziehung mono- und/oder difunktionalisierter cyclischer Dicarbonsäureanhydride. Auch die Verwendung von Vorkondensaten aus mono- und/oder difunktionalisiertem Dicarbonsäureanhydrid und einem der Monomeren ist möglich. Die Anhydridgruppen bleiben unter den Polykondensationsbedingungen erhalten und ermöglichen die nachfolgende Umsetzung mit den Hydroxyl- bzw. Estergruppen schmelzbarer, linearer Polyester zur erfindungsgemäßen Herstellung der polyesterend- und/oder -seitengruppen-gepfropften Polymeren.

Zur erfindungsgemäßen Herstellung der Polyester-gepfropften Copolymeren ist es zweckmässig Polyesterimide mit cyclischen Dicarbonsäureanhydridend- und/oder -seiten-gruppen, die bei der Umsetzung von 4-Carboxyphthalimidohexansäure und/oder 1,6-Bis-[4-carboxyphthalimido]-hexan, p-Acetoxybenzoesäure und Hydrochinondiacetat mit mono- und/oder difunktionalisierten cyclischen Dicarbonsäureanhydriden, in der Schmelze bei 170 bis 320°C entstehen, in Forrm eines vorkondensates einzusetzen.

Anstelle von 4-Carboxyphthalimidohexansäure kann ein Gemisch aus Polyamid-6 und Trimellitsäureanhydrid im Molverhältnis 1:1 verwendet werden, das in der Schmelze unmittelbar vor der Polymerbildung mit p-Acetoxybenzoesäure, Hydrochinondiacetat und einem mono- und/oder difunktionalisierten cyclischen Dicarbonsäureanhydrid zur Reaktion gebracht wird.

Zur erfindungsgemäßen Herstellung der Polyester-gepfropften Copolymeren ist es weiterhin vorteilhaft, Copolyester mit cyclischen Dicarbonsäureanhydridend- und/ oder - seitengruppen, die bei der Umsetzung von p-Acetoxybenzoesäure sowie aromatischen, aliphatisch-aromatischen bzw. aliphatischen Dicarbonsäuren und Hydrochinondiacetat mit monound/oder difunktionalisierten Dicarbonsäureanhydriden vorzugsweise in der Schmelze bei 170 bis 320°C entstehen, zu verwenden.

Es ist auch von Vorteil zur erfindungsgemäßen Herstellung der Polyester-gepfropften Copolymeren Copolyesteramide mit cyclischen Dicarbonsäureanhydridend- und/oder -seitengruppen zu verwenden, die neben p-Acetoxybenzoesäure Acetylverbindun-gen anderer Hydroxycarbonsäuren und an Stelle von Hydrochinondiacetat weitere acylierte zweiwertige Phenole sowie Aminophenole bzw. aromatische Aminocarbonsäuren enthalten.

Als mono- bzw. difunktionalisierte cyclische Dicarbonsäureanhydride werden aliphatische Monomere, beispielsweise Diacetoxybernsteinsäureanhydrid Acetoxy- und/ oder Diacetoxyperhydrophthalsäureanhydrid bzw. aromatische Verbindungen wie Trimellitsäureanhydrid und Diacetoxyphthalsäureanhydrid verwendet.

Eine weitere vorteilhafte Ausführung des erfindungsgemäßen Verfahrens besteht darin, dass zur Polykondensation in Lösung oder Schmelze an Stelle der Acetylverbindungen Hydroxyverbindungen in Gegenwart von Acetanhydrid umgesetzt werden.

Die erfindungsgemäße Herstellung der Polyester-gepfropften Copolymeren erfolgt vorzugsweise dadurch, dass die steifoder halbsteifkettigen Polymeren mit end- und/oder seitenständigen Anhydridgruppen aliphatischer und/oder aromatischer Dicarbonsäuren in der Schmelze vorzugsweise mit den Hydroxylendgruppen von nieder- bzw. hochmolekularen Polyestern reagieren und zu Block- bzw. seiten-kettengepfropften Polymeren mit wenig veränderter Molmassenverteilung in den Haupt-bzw. Seitenketten umgesetzt werden.

Eine mögliche Ausführungsvariante der erfindungsgemäßen Herstellung und Nutzung der Polyester-gepfropften Copolymeren ist die in situ Reaktion der cyclischen Anhydridgruppen vorzugsweise aromatischer Dicarbonsäuren in steif- bzw. halbsteifkettigen Polymeren mit dem Matrix-Polyester während der Blendherstellung.

Da die erfindungsgemäß hergestellten Polyester-gepfropften steif- bzw. halbsteifkettigen Copolymeren in Abhängigkeit vom Pfropfungsgrad, der Länge der Seitenketten sowie der Struktur und Zusammensetzung der Polymerhauptkette mit schmelzbaren Polyestern mikrophasige, gegebenenfalls molekulardisperse Legierungen (Polymer/Polymer-Lösungen) bilden, sind sie zur Herstellung dimensionsstabiler, mechanisch hochbelastbarer, Filme ,Folien und besonders Filamenten geeignet. Ein weiterer bevorzugter Verwendungszweck der erfindungsgemäß hergestellten Pfropfcopolymeren ist ihre Nutzung als Verträglichkeitsvermittler bei der Herstellung und Verarbeitung in situ verstärkter LCP/Polyester-Blends.

Zur Überprüfung der mechanischen Kennwerte wurden die erhaltenen Granulate bis auf einer Restfeuchte von kleiner 0,02 % getrocknet und auf einem Hochtemperaturspinnstand bei 400 m/min zu Filamenten mit 12 Einzelkapillaren versponnen und anschließend auf einer Reifenhäuser-Reckanlage zweistufig gereckt, wobei das Filamentkabel über eine auf 200 °C beheizte Schiene geführt wurde. Von den Filamenten erfolgte die Bestimmung der Feinheit nach DIN EN ISO 1973, der feinheitsbezogenen Reißkraft nach ISO 527, der Reißdehnung nach ISO 527 und des Anfangsmoduls nach ISO 527.

Die Erfindung soll an folgenden Beispielen erläutert werden:

### [Beispiele]

### Beispiel 1

In einem 250ml-Planschliffgefäß mit Rührer, Stickstoffeinleitungsrohr und Destillierbrücke werden folgende Substanzen eingewogen:

| | |
|---|---|
| 122,1 g (0,4 mol) | 4-Carboxyphthalimidohexansäure |
| 52,8 g (0,2 mol) | 3,6-Diacetoxyphthalsäureanhydrid |
| 0,1 g | Magnesiumoxid |

Die Substanzen werden grob gemischt und gründlich mit Stickstoff gespült. Unter weiterer Stickstoffzufuhr wird das Gemisch im Metallbad bei 200°C aufgeschmolzen. Die Temperatur wird unter Rühren allmählich bis auf max. 240°C erhöht, wobei Essigsäure abdestilliert. Zur Vervollständigung des Umsatzes wird der Druck stufen-weise bis auf 2 mbar abgesenkt. Dabei nimmt die Viskosität der Schmelze stark zu. Nach einer Behandlungsdauer von insgesamt ca. 6 Stunden wird das Reaktions-gefäß aus dem Bad entfernt und die noch heiße, zähflüssige Schmelze auf eine Folie überführt. Zum Abkühlen wird das Produkt in einen Exsiccator gestellt. Nach dem Erkalten wird das Vorkondensat in einer Analysenmühle zerkleinert und unter Feuchtigkeitsausschluß bis zur Verwendung bei der Polykondensation aufbewahrt.

Das hellbeige bis hellbraune Produkt weist einen Carboxylgruppengehalt (potentiometrisch) von ca. 4000 µequ./g auf. Weicht der gefundene Carboxylgruppengehalt noch stark vom Sollwert (3975 µequ./g) ab, wird das Produkt nachbehandelt.

### Beispiel 2

In einem 750ml-Planschliff-Reaktionsgefäß mit Rührer, Stickstoffeinleitungsrohr und Destillierbrücke werden die folgenden, zur Herstellung eines Polyesterimidanhydrids mit einer angestrebten Molmasse von 40.000 g/mol und 6 Anhydridgruppen/Molekül notwendigen Substanzen eingewogen:

| | |
|---|---|
| 99,58 g (0,3262 mol) | 4-Carboxyphthalimidohexansäure |
| 125,82 g (0,6984 mol) | p-Acetoxybenzoesäure |
| 68,92 g (0,3549 mol) | Hydrochinondiacetat |
| 2,20 g (0,01146 mol) | Trimellitsäureanhydrid |
| 17,28 g (0,0229 mol) | Vorkondensat (s. Beispiel1) |
| 0,06 g | Magnesiumoxid |

Die Substanzen werden grob gemischt und gründlich mit Stickstoff gespült. Unter weiterer Stickstoffzufuhr wird das Gemisch im Metallbad bei 200°C aufgeschmolzen. Die Temperatur wird unter Rühren allmählich bis auf 260°C (max. 280°C) erhöht, wobei Essigsäure abdestilliert. Zur Vervollständigung der Polykondensation wird der Druck stufenweise mind. bis auf 1 mbar abgesenkt. Dabei nimmt die Viskosität der Schmelze stark zu. Nach einer Behandlungsdauer von insgesamt ca. 6 Stunden wird das Reaktionsgefäß aus dem Bad entfernt und die noch heiße, zähflüssige Schmelze auf eine Folie überführt. Zum Abkühlen wird das Produkt in einen Exsiccator ge-stellt. Nach dem Erkalten wird es in einer Analysenmühle zerkleinert und unter Feuchtigkeitsausschluß bis zur weiteren Verwendung aufbewahrt.

Das hellbraune Produkt weist folgende Kenndaten auf:

| | |
|---|---|
| Carboxylgruppengehalt | 158 µequ./g (1 Carboxylgr. = 1 Anhydridgr.) |
| Acetylgruppengehalt | 1,1 µequ./g |
| relative Lösungsviskosität | 1,32 |

Aus dem Carboxyl- und Acetylgruppengehalt ergibt sich eine Molmasse von ca. 37.710 g/mol. Das Produkt zeigt einen Schmelzpunkt von 120°C, bei ca. 130°C beginnt die Ausbildung der anisotropen Phase, die erst bei 292°C in die isotrope Phase übergeht. Das Produkt ist somit flüssigkristallin.

### Beispiel 3

In einem 750ml-Planschliff-Reaktionsgefäß mit Rührer, Stickstoffeinleitungsrohr und Destillierbrücke werden die folgenden, zur Herstellung eines Polyesterimidanhydrids mit einer angestrebten Molmasse von 60.000 g/mol und 10 Anhydridgruppen/Mole-kül notwendigen Substanzen eingewogen:

| | |
|---|---|
| 119,66 g (0,392 mol) | 4-Carboxyphthalimidohexansäure |
| 152,77 g (0,848 mol) | p-Acetoxybenzoesäure |
| 83,11 g (0,428 mol) | Hydrochinondiacetat |
| 1,54 g (0,008 mol) | Trimellitsäureanhydrid |
| 24,15 g (0,032 mol) | Vorkondensat (s. Beispiel1) |
| 0,06 g | Magnesiumoxid |

Die Substanzen werden grob gemischt und gründlich mit Stickstoff gespült. Unter weiterer Stickstoffzufuhr wird das Gemisch im Metallbad bei 200°C aufgeschmolzen. Die Temperatur wird unter Rühren allmählich bis auf 280°C (max. 290°C) erhöht, wobei Essigsäure abdestilliert. Zur Vervollständigung der Polykondensation wird der Druck stufenweise mind. bis auf 1 mbar abgesenkt. Dabei nimmt die Viskosität der Schmelze stark zu. Nach einer Behandlungsdauer von insgesamt ca. 8 Stunden wird das Reaktionsgefäß aus dem Bad entfernt und die noch heiße, zähflüssige Schmelze auf eine Folie überführt. Zum Abkühlen wird das Produkt in einen Exsiccator ge-stellt. Nach dem Erkalten wird es in einer Analysenmühle zerkleinert und unter Feuchtigkeitsausschluß bis zur weiteren Verwendung aufbewahrt.

Das hellbraune Produkt weist folgende Kenndaten auf:

| | | |
|---|---|---|
| Carboxylgruppengehalt | 151 µequ./g | (1 Carboxylgr. = 1 Anhydridgr.) |
| Acetylgruppengehalt | 0 µequ./g | |
| relative Lösungsviskosität | 1,44 | |

Aus dem Carboxylgruppengehalt ergibt sich eine Molmasse von ca. 66.230 g/mol. Das Produkt zeigt einen Schmelzpunkt von 150°C, bei ca. 170°C beginnt die Aus-bildung der anisotropen Phase, die erst bei 280 - 300°C in die isotrope Phase übergeht. Das Produkt ist somit flüssigkristallin.
Bei Ansätzen, die eine hohe Molmasse zum Ziel haben, ist mitunter zur Vervollständigung der Polykondensation eine längere Behandlungsdauer notwendig. Diese kann auch als Nachkondensation ausgeführt werden.

### Beispiel 4

In einem 250ml-Planschliff-Reaktionsgefäß mit Rührer, Stickstoffeinleitungsrohr und Destillierbrücke werden die folgenden, zur Herstellung eines Polyesterimidanhydrids mit einer angestrebten Molmasse von 15.000 g/mol und 4 Anhydridgruppen/Molekül notwendigen Substanzen eingewogen:

| | |
|---|---|
| 38,16 g (0,125 mol) | 4-Carboxyphthalimidohexansäure |
| 27,02 g (0,150 mol) | p-Acetoxybenzoesäure |
| 30,10 g (0,155 mol) | Hydrochinondiacetat |
| 1,92 g (0,010 mol) | Trimellitsäureanhydrid |
| 7,07 g (0,010 mol) | Vorkondensat aus 4-Carboxyphthalimidohexansäure und Diacetoxybernsteinsäurteanhydrid (analog Beispiel1) |
| 0,01 g | Magnesiumoxid |

Die Substanzen werden grob gemischt und gründlich mit Stickstoff gespült. Unter weiterer Stickstoffzufuhr wird das Gemisch im Metallbad bei 200°C aufgeschmolzen. Die Temperatur wird unter Rühren allmählich bis auf 270°C (max. 290°C) erhöht, wobei Essigsäure abdestilliert. Zur Vervollständigung der Polykondensation wird der Druck stufenweise mind. bis auf 1 mbar abgesenkt. Dabei nimmt die Viskosität der Schmelze stark zu. Nach einer Behandlungsdauer von insgesamt ca. 7 Stunden wird das Reaktionsgefäß aus dem Bad entfernt und die noch heiße, zähflüssige Schmelze auf eine Folie ausgegossen. Zum Abkühlen wird das Produkt in einen Exsiccator gestellt. Nach dem Erkalten wird es in einer Analysenmühle zerkleinert und unter Feuchtigkeitsausschluß bis zur weiteren Verwendung aufbewahrt.

Das bräunliche Produkt weist folgende Kenndaten auf:

| | |
|---|---|
| Carboxylgruppengehalt | 235 µequ./g |
| | (1 Carboxylgr. = 1 Anhydridgr.) |
| Acetylgruppengehalt | 4 µequ./g |
| relative Lösungsviskosität | 1,32 |

Aus dem Carboxyl-und Acetylgruppengehalt ergibt sich eine Molmasse von ca. 16.740 g/mol. Das Produkt zeigt einen Schmelzpunkt von 125°C, bei ca. 177°C beginnt die Ausbildung der anisotropen Phase, die erst ab 320°C in die isotrope Phase übergeht. Das Produkt ist somit flüssig-kristallin.

### Beispiel 5

990 g intensiv getrocknetes Polyethylenterephthalat (Wassergehalt < 0,05%) mit einer Intrinsic-Viskosität von 0,8823 dl/g werden in einer Trommel mit 4 g Butylstea-rat beaufschlagt und anschließend mit 10 g feingemahlenem Polyesterimidanhydrid, das bei einer Molmasse von 30.500 g/mol 6 Anhydridgruppen/Molekül enthält, 20 Minuten innig vermischt. Dabei wird auf Ausschluß von Luftfeuchtigkeit geachtet.
Das Granulat wird in einem Doppelschneckenextruder vom Typ ZSK 25 bei einer mittleren Verweilzeit von 120 Sekunden aufgeschmolzen. Der Mischprozeß wird bei einer Umdrehungszahl von >200/min und einer Temperatur von 270°C durchgeführt.
Die Schmelze wird in ein Wasserbad extrudiert zum Strang ausgezogen, granuliert und getrocknet.
Das erhaltene Granulat zeichnet sich durch einen Anstieg der Intrinsic-Viskosität auf 0,8924 dl/g aus und ist zur Herstellung von Filamenten geeignet. Der Carboxylgruppengehalt des modifizierten Polyesters bleibt unverändert.
Rastereletronenmikroskopische Untersuchungen wiesen Teilchengrössen von 720 bis 880 nm in der Polymermatrix aus

Zur Prüfung der im folgenden aufgeführten mechanischen Eigenschaften wurde das Produkt zu Filamenten verarbeitet. Dabei wurden folgende Werte ermittelt:

| | |
|---|---|
| Feinheit | 8,92 tex |
| Reißdehnung | 24,6 % |
| feinheitsbezogene Reißkraft | 24,21 cN/tex |
| Zug-E-Modul | 10986 MPa |

Ein Vergleich mit vorginären Polyethylenterephthalat ohne LCP-Zusatz ergab folgende Werte:

| | |
|---|---|
| Feinheit | 9,12 tex |
| Reißdehnung | 27 % |
| feinheitsbezogene Reißkraft | 17,24 cN/tex |
| Zug-E-Modul | 7791 MPa |

### Beispiel 6

900 g intensiv getrocknetes Polyethylenterephthalat (Wassergehalt < 0,05%) mit einer Intrinsic-Viskosität von 0,7710 dl/g werden mit 100 g granuliertem Polyesterimidanhydrid, das bei einer Molmasse von 40.640 g/mol 4 Anhydridgruppen/Molekül enthält, in einer Trommel innig vermischt und anschließend unter Feuchtigkeitsausschluß in einem Doppelschneckenextruder bei 270°C und einer Schnecken-umdrehungszahl von 250/min zur Reaktion gebracht. Die Verweilzeit beträgt 180 Sekunden.

Nach Austragen der Schmelze und Granulieren wird das Umsetzungsprodukt schonend bei 80°C getrocknet.
Die Intrinsic-Viskosität ist nach der reaktiven Extrusion auf 0,8324 dl/g angestiegen. Der Melt-Flow-Index (MFI) wurde mit 26,9 g/10 min bestimmt. Beim Carboxylgruppengehalt ist ein Anstieg um 60 µequ./g zu verzeichnen. Die charakteristische Anhydridbande des IR-Spektrums bei 1739 cm⁻¹ ist nicht mehr vorhanden.

Zur Prüfung der im folgenden aufgeführten mechanischen Eigenschaften wurde das Produkt zu Filamenten verarbeitet. Dabei wurden folgende Werte ermittelt:

| | |
|---|---|
| Feinheit | 9,14 tex |
| Reißdehnung | 27 % |
| feinheitsbezogene Reißkraft | 21,9 cN/tex |
| Zug-E-Modul | 10117 MPa |

### Beispiel 7

925 g eines intensiv getrockneten Polyethylenterephthalats (Wassergehalt < 0,05%) mit einem Carboxylgruppengehalt von 19,3 µequ./g und einer Intrinsic-Viskosität von 0,7912 dl/g werden mit 75 g Stabaxol KE 8059 innig vermischt und in einem Doppelschneckenextruder ZSK 25 bei einer mittleren Verweilzeit von 120 Sekunden und einer Temperatur von 270°C umgesetzt.

Nach dem Granulieren und Trocknen des Produktes wurden ein Carboxylgruppengehalt von 0 µequ./g und eine Intrinsic-Viskosität von 0,7716 dl/g bestimmt.

Dieses Granulat wird ebenfalls wieder unter Feuchtigkeitsausschluß mit 10% des im Beispiel 6 verwendeten Polyesteranhydrids unter den gleichen Bedingungen zur reaktiven Umsetzung gebracht. Der Carboxylgruppengehalt bleibt bei 0 µequ./g.

## Patentansprüche

1. Verfahren zur Herstellung von Polyesterblockcopolymeren, insbesondere von polyesterend- und/oder -seitenketten-gepfropften steif- und/oder halbsteifkettigen Polymeren vorrangig für schmelzfähige Polyester, **dadurch gekennzeichnet, dass** monomere Bausteine steif- und/oder halbsteifkettiger Polymerer bzw. aus einzelnen Monomeren hergestellte Vorkondensate gemeinsam mit mono- und/oder difunktionalisierten, cyclischen Dicarbonsäureanhydriden oder deren Vorkondensate zu Polymeren mit Anhydridend- und/oder -seitengruppen polykondensiert werden, die gebildeten Polyesterimidanhydride mit den Hydroxyl- und/oder Estergruppen schmelzbarer, linearer Polyester zu Blockcopolymeren bzw. zu end- und/oder seitenketten-gepfropften steif- und/oder halbsteifkettigen Polymeren umgesetzt werden, wobei der Anteil der Polyesterimidanhydride 0,10 bis 11,11 Masseprozent, bezogen auf den hydroxyl- und/oder estergruppenhaltigen Polyester, beträgt.

2. Verfahren nach Anspruch 1, **dadurch gekennzeichnet, dass** als monomere Bausteine 4-Carboxyphthalimidohexansäure und/oder 1,6-Bis-[4-carboxyphthalimido]-hexan, p-Acetoxybenzoesaure und Hydrochinondiacetat mit mono- und/oder difunktionalisierten cyclischen Dicarbonsäureanhydriden vorzugsweise in Schmelze bei 170 bis 320 °C zu den Polymeren mit cyclischen Anhydridend- und/oder-seitengruppen umgesetzt werden.

3. Verfahren nach Anspruch 1, **dadurch gekennzeichnet, dass** als monomere Bausteine 4-Carboxyphthalimidohexansäure und/oder 1,6-Bis-[4-carboxyphthalimido]-hexan mit p-Acetoxybenzoesäure im Molverhältnis 1 : 2 vor der Polymerbildungsreaktion in der Schmelze zu einem Vorkondensat umgesetzt werden.

4. Verfahren nach Anspruch 1, **dadurch gekennzeichnet, dass** als monomere Bausteine 4-Carboxyphthalimidohexansäure und/oder 1,6-Bis-[4-carboxyphthalimido]-hexan mit difunktionalisierten cyclischen Dicarbonsäureanhydriden im Molverhältnis 2 : 1 vor der Polymertaildungsreaktion in der Schmelze zu einem Vorkondensat umgesetzt werden.

5. Verfahren nach Anspruch 1 bis 4, **dadurch gekennzeichnet, dass** neben p-Acetoxybenzoesäure Acetylverbindungen anderer Hydroxycarbonsäuren, wie beispielsweise p-Acetoxyphthalsäure, und an Stelle von Hydrochinondiacetat weitere acetylierte zweiwertige Phenole und/oder Aminophenole bzw. aromatische Aminocarbonsäuren verwendet werden.

6. Verfahren nach Anspruch 1 bis 5, **dadurch gekennzeichnet, dass** zur Polykondensation in Schmelze oder Lösung an Stelle der Acetylverbindungen Hydroxyverbindungen in Gegenwart von Acetanhydrid verwendet werden.

7. Verfahren nach Anspruch 1 bis 6, **dadurch gekennzeichnet, dass** die mono-bzw. difunktionalisierten cyclischen Dicarbonsäureanhydride aliphatische Monomere wie Diacetoxybemsteinsäureanhydrid bzw. aromatische Verbindungen wie Trimellitsäureanhydrid und Acetoxy- bzw. Diacetoxyphthalsäureanhydrid sind.

8. Verfahren nach Anspruch 1 bis 7, **dadurch gekennzeichnet, dass** die steifoder halbsteifkettigen Polymeren mit end- und/oder seitenständigen Anhydridgruppen aliphatischer und/oder aromatischer Dicarbonsäuren mit Polyethylenterephthalat und/oder Polybutylenterephthalat zur Reaktion gebracht werden, wobei gegebenenfalls die in den genannten jeweiligen polyestern vorhandenen und/oder bei der Umsetzung entstandenen Carboxylgruppen durch Reaktion mit Oxazolinen und/oder Carbodiimiden in der Schmelze blockiert werden.

9. Verfahren nach Anspruch 1 bis 8, **dadurch gekennzeichnet, dass** die Rolyesterblockcopalymere zu Filamenten oder Fasern verformt werden.

10. Verwendung von Polyesteriblockoopolymeren nach Anspruch 1 bis 7 als Verträglichkeitsvermittler in Polyamid- und/oder Polyester- und/oder Polyamid/Polyester-Mischungen.

## Claims

1. A process for production of polyester block copolymers, especially of polyester end and/or side chain grafted rigid and/or semirigid chained polymers primarily for meltable polyesters, wherein monomeric building blocks of rigid and/or semirigid chained polymers or precondensates formed from individual monomers are conjointly polycondensed with mono- and/or difunctionalized cyclic dicarboxylic anhydrides or their precondensates to form polymers having anhydride end and/or side groups, the polyesterimide anhydrides formed are reacted with the hydroxyl and/or ester groups of fusible linear polyesters to form block copolymers or to form end and/or side chain grafted rigid and/or semirigid chained polymers, the fraction of polyester imide anhydride being in the range from 0.10 to 11.11 mass percent in relation to polyester having hydroxyl and/or ester groups.

2. A process according to claim 1, wherein as monomeric building blocks 4-carboxyphthalimidohexanoic acid and/or 1,6-bis[4-carboxyphthalimido]-hexane, p-acetoxybenzoic acid and hydroquinone diacetate are reacted with mono- and/or difunctionalized cyclic dicarboxylic anhydrides preferably in the melt at 170 to 320°C to form the polymers having cyclic anhydride end and/or side groups.

3. A process according to claim 1, wherein as monomeric building blocks 4-carboxyphthalimidohexanoic acid and/or 1,6-bis[4-carboxyphthalimido]hexane are reacted with p-acetoxybenzoic acid in a molar ratio of 1:2 prior to the polymerization reaction in the melt to form a precondensate.

4. A process according to claim 1, wherein as monomeric building blocks 4-carboxyphthalimidohexanoic acid and/or 1,6-bis[4-carboxyphthalimido]hexane are reacted with difunctionalized cyclic dicarboxylic anhydrides in a molar ratio of 2:1 prior to the polymerization reaction in the melt to form a precondensate.

5. A process according to claim 1 to 4, wherein as well as p-acetoxybenzoic acid acetyl compounds of other hydroxy carboxylic acids are used, for example p-acetoxyphthalic acid, and in place of hydroquinone diacetate further acetylated dihydric phenols and/or aminophenols or aromatic amino carboxylic acids are used.

6. A process according to claim 1 to 5, wherein hydroxy compounds in the presence of acetic anhydride are used for the polycondensation in the melt or solution in place of the acetyl compounds.

7. A process according to claim 1 to 6, wherein the mono- and difunctionalized cyclic dicarboxylic anhydrides are respectively aliphatic monomers such as diacetoxysuccinic anhydride and aromatic compounds such as trimellitic anhydride and acetoxy- or diacetoxyphthalic anhydride.

8. A process according to claim 1 to 7, wherein the rigid or semirigid chained polymers having end and/or side disposed anhydride groups of aliphatic and/or aromatic dicarboxylic acids are polyethylene terephthalate and/or polybutylene terephthalate, wherein carboxyl groups optionally present in the polyester and/or formed in the course of the reaction are blocked by reaction with oxazolines and/or carbodiimides in the melt.

9. A process according to claim 1 to 8, wherein the polyester block copolymers are shaped into filament or fiber.

10. Use of polyester block copolymers according to claim 1 to 7 as compatibilizers in a polymer blend of polyamides and/or polyesters.

## Revendications

1. Procédé de fabrication de copolymères séquencés de polyester, en particulier de polymères à chaîne rigide et/ou semi-rigide sur lesquels sont greffées des chaînes terminales et/ou latérales de polyester, lequel procédé est destiné prioritairement à des polymères fusibles, **caractérisé en ce que**
des motifs monomères de polymères à chaîne rigide et/ou semi-rigide respectivement de précondensats obtenus à partir de monomères individuels sont polycondensés conjointement avec des anhydrides d'acide dicarbonique cycliques mono- et/ou difonctionnalisés ou leurs précondensats pour donner des polymères comportant des groupes latéraux et/ou à terminaison anhydride,
les anhydrides de polyester-imide formés comportant les groupes hydroxyles et/ou ester de polyester linéaire fusible sont transformés pour donner des copolymères séquencés respectivement des polymères à chaîne rigide et/ou semi-rigide sur lesquels sont greffées des chaînes terminales et/ou latérales, le pourcentage en poids des anhydrides de polyester-imide par rapport au polyester contenant des groupes hydroxyl et/ou ester étant compris entre 0,10 et 11,11.

2. Procédé selon la revendication 1, **caractérisé en ce qu'**il est utilisé comme motifs monomères l'acide 4-carboxyphthalimidohexanoïque et/ou le 1,6-Bis-[4-carboxyphthalimido]-hexane, l'acide p-acétoxybenzoïque et le diacétate d'hydroquinone comportant des anhydrides d'acide dicarbonique mono et/ou difonctionnalisé, de préférence en fusion à une température comprise entre 170 et 320°C, en vue de leur transformation pour donner les polymères comportant des groupes cycliques latéraux et/ou à terminaison anhydride.

3. Procédé selon la revendication 1, **caractérisé en ce qu'**il est utilisé comme motifs monomères l'acide 4-carboxyphthalimidohexanoïque et/ou le 1,6-Bis-[4-carboxyphthalimido]-hexane avec l'acide p-acétoxybenzoïque dans le rapport molaire de 1:2 dans la masse en fusion avant la réaction de polymérisation, en vue de leur transformation pour donner un précondensat.

4. Procédé selon la revendication 4, **caractérisé en ce qu'**il est utilisé comme motifs monomères l'acide 4-carboxyphthalimidehoxanoïque et/ou le 1,6-Bis-[4-carboxyphthalimido]-hexane avec des anhydrides d'acide dicarbonique cyclique difonctionnalisé dans le rapport molaire de 2:1 dans la masse en fusion avant la réaction de polymérisation, en vue de leur transformation pour donner un précondensat.

5. Procédé selon les revendications 1 à 4, **caractérisé en ce qu'**il est utilisé en plus de l'acide p-acétoxybenzoïque des liaisons acétyles d'autres acides hydroxycarboniques, comme par exemple l'acide p-acétoxyphthalique, et à la place du diacétate d'hydroquinone d'autres phénols acétylés bivalents et/ou des aminophénols respectivement des acides aminocarboniques aromatiques.

6. Procédé selon les revendications 1 à 5, **caractérisé en ce qu'**il est utilisé des liaisons hydroxy en présence d'acétanhydride à la place des liaisons acétyle dans la masse en fusion ou la solution en vue de la polycondensation.

7. Procédé selon les revendications 1 à 6, **caractérisé en ce que** les anhydrides d'acide dicarbonique cyclique mono- respectivement difonctionnalisé sont des monomères aliphatiques, comme l'anhydride d'acide diacétoxysuccinique, respectivement des liaisons aromatiques comme l'anhydride d'acide triméllitique et l'anhydride d'acide acetoxy ou diacétoxyphthalique.

8. Procédé selon les revendications 1 à 7, **caractérisé en ce que** les polymères à chaîne rigide ou semi-rigide sont amenés à réagir avec des groupes anhydrides en position latérale et/ou d'extrémité d'acides dicarboniques aliphatiques et/ou aromatiques conjointement avec du polyéthylène-téréphthalate et/ou polybutylène-téréphthalate, les groupes carboxyles présents dans les polyesters respectifs mentionnés et/ou produits lors de la transformation étant le cas échéant bloqués dans la masse en fusion par réaction avec des oxazolines et/ou des carbodiimides.

9. Procédé selon les revendications 1 à 8, **caractérisé en ce que** les copolymères séquencés de polyester sont mis sous la forme de filaments ou de fibres.

10. Utilisation de copolymères séquencés de polyester selon les revendications 1 à 7 comme médiateur de compatibilité dans des mélanges de polyamide et/ou polyester et/ou de polyamide/polyester.
